(19) Europäisches Patentamt
European Patent Office
Office européen des brevets

(11) **EP 1 978 742 A2**

(12) **EUROPEAN PATENT APPLICATION**

(43) Date of publication:
**08.10.2008 Bulletin 2008/41**

(51) Int Cl.:
*H04N 7/26* (2006.01)    *H04N 1/41* (2006.01)

(21) Application number: **07119834.5**

(22) Date of filing: **01.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **02.04.2007 KR 20070032457**

(71) Applicant: SAMSUNG ELECTRONICS CO., LTD.
**Suwon-si,
Gyeonggi-do 442-742 (KR)**

(72) Inventors:
• **LEE, Ho-keun
843-2002,Byeokjeokgol 8danji Apt.
Gyeonggi-do (KR)**

• **KIM, Sang-ho
322-1304,Cheongmyeong maeul
Yeongtong-gu, Suwon-si ,Gyeonggi-do (KR)**
• **KIM, Choon-woo
Yangcheon-gu, Seoul (KR)**
• **RYU, Byong-tae
102-1302, Chonggu Apt., 859
Seoul (KR)**
• **LEE, Jong-ok
Seo-gu, Incheon (KR)**

(74) Representative: **Brandon, Paul Laurence
Appleyard Lees
15 Clare Road
Halifax, Yorkshire HX1 2HY (GB)**

(54) **Encoding and decoding method for enhancing depth resolution of an image, and print system using the same**

(57)    A print system having an enhanced depth resolution of an image. The print system includes a host device to divide a gray image into basic block units, to determine whether the basic block units represent an edge area, to convert the gray image into binary data, and to output the converted gray image; and an image forming apparatus to determine whether the binary data received from the host device represents an edge area, to convert the binary data into a gray image according to the result of determination, and to print the gray image. As a result, depth resolution is enhanced, and print data transmission time is shortened.

FIG. 2

EP 1 978 742 A2

**Description**

BACKGROUND OF THE INVENTION

1. Field of the Invention

Aspects of the present invention relate to an encoding and decoding method for enhancing depth resolution of an image, and a print system using the same.

2. Related Art

The performance of image forming apparatuses, such as printers, facsimile machines, or multifunction units, mainly depends on print speed and image quality. The specific factors that determine print speed include print image resolution, the time (print data transmission time) consumed for transmitting the print data from a host device (such as a computer system) to an image forming apparatus, the time (print data processing time) consumed for processing the print data at the host device or the image forming apparatus, and the time (print time) consumed for printing the image at a printer engine of the image forming apparatus.

The print time used to be the main factor to determine the print speed. However, as higher-speed printer engines have been introduced, the print data transmission time and the print data process time have become the main factor in determining the print speed. The print data transmission time and the print data processing time vary from product to product, depending on the type of data exchange between the host device and the image forming apparatus. For example, if the host device employs a graphics device interface (GDI) type printer driver that is focused on color matching or image rendering, print data is compressed at the host device by a binary compression algorithm to reduce transmission time, before being transmitted to the image forming apparatus. The print data is then decompressed at the image forming apparatus and printed on a printable medium, such as paper or transparent sheet.

Transmission of print data from a host device to an image forming apparatus in a conventional manner will be explained as follows. First, the host device performs halftoning with respect to a 8-bit gray image in 200*200 of resolution, such that the gray image is converted to 1-bit binary image in 200*200 of resolution. The binary image is compressed and transmitted to the image forming apparatus. As the image forming apparatus receives and decompresses the binary image received from the host device, the binary image is recovered into the gray image and printed on the printable medium.

The host device performs additional image processing before sending the binary image to the image forming apparatus, for the purpose of enhancing depth resolution of a printed image. Accordingly, the amount of data transmitted to the image forming apparatus increases, and print data transmission time increases. As a result, a coding method is required that can shorten the print data transmission time and also enhance depth resolution of an image.

SUMMARY OF THE INVENTION

Preferred embodiments of the present invention aim to provide an encoding and decoding method that enhances depth resolution of an image by encoding and decoding according to presence and absence of an edge area in the image, and subsequently shortens the time to transmit print data, and a print system using the method.

Additional aspects and/or advantages of the invention will be set forth in part in the description which follows and, in part, will be obvious from the description, or may be learned by practice of the invention.

According to an aspect of the present invention, an encoding method is provided. The method includes detecting an edge image from a gray image; dividing the detected edge image into a plurality of basic block units and determining whether each of the basic block units represents an edge area of the gray image; converting the gray image into binary data by applying an encoding scheme corresponding to the result of edge area determination; and transmitting the binary data to an image forming apparatus so as to form an image corresponding to the binary data onto a printable medium.

Suitably, the dividing of the detected edge image includes determining that a basic block unit of the plurality of basic block units represents an edge area of the gray image if the number of white pixels of the basic block unit exceeds a reference value; and determining that the basic block unit represents a non-edge area if the number of white pixels does not exceed the reference value.

Suitably, the converting includes screening the gray image corresponding to the basic block unit and converting the gray image into binary data, if the basic block unit is determined to represent an edge area of the gray image.

Suitably, the binary data includes an additional flag bit to indicate whether or not the basic block unit represents an edge area of the gray image.

Suitably, the converting includes computing an average of the gray image corresponding to the basic block unit if the basic block unit is determined to represent a non-edge area; and converting the average into binary data.

Suitably, a bit corresponding to a pixel in the center of the basic block unit is a flag bit indicating whether the basic block unit represents an edge area of the gray image.

According to another aspect of the present invention, a decoding method is provided. The method includes determining, upon receiving binary data, whether or not a plurality of basic block units of the received data represent an edge area of a gray image according to a flag bit of each basic block unit; converting the binary data into a gray image of basic block unit structure, according to whether the basic block unit represents an edge area; and printing the converted gray image.

Suitably, the determining includes determining that a basic block unit of the plurality of basic block units represents an edge area if the basic block unit has a flag bit 0, and determining that the basic block unit represents a non-edge area if the basic block unit has a flag bit 1.

Suitably, the converting of the binary data includes converting bits representing a basic block unit of the plurality of basic block units into gray values, if the basic block unit is determined to represent a non-edge area; and forming the gray image by matching the converted gray values to the basic block unit.

Suitably, the decoding method includes converting the bits of a basic block unit of the plurality of basic block units into gray values and matching to a bit in the center of the basic block unit, if the basic block unit of the received binary data represents a non-edge area; computing a gray value of each pixel of the basic block unit using a bit in the center that is converted into the gray value and neighboring bits; and forming the gray image, by matching the computed gray value to the basic block unit.

According to another aspect of the present invention, a print system is provided. The print system includes a host device to divide a gray image into basic block units, to determine whether the basic block units represent an edge area of the gray image, to convert the gray image into binary data, and to output the converted gray image; and an image forming apparatus to determine whether the binary data received from the host device represents an edge area, to convert the binary data into a gray image according to the result of determination, and to print the gray image.

Suitably, a host device is provided. The host device includes an edge detecting unit to detect an edge image from a gray image; a determining unit to divide the detected edge image into a plurality of basic block units, and to determine whether each of the basic block units represents an edge area of the gray image; an encoder to convert the gray image into binary data by applying an encoding scheme corresponding to the result of edge area determination; and a transmitter to transmit the binary data to an image forming apparatus for printing.

Suitably, the determining unit determines a basic block unit of the plurality of basic block units to represent an edge area if the number of white pixels of the basic block unit exceeds a reference value; and determines the basic block unit to represent a non-edge area if the number of white pixels does not exceed the reference value.

Suitably, the encoder includes a binary converting unit to screen the gray image corresponding to the basic block unit and to convert the gray image into binary data, if the basic block unit is determined to represent an edge area, and a storage unit to store the converted binary data and to match the binary data to corresponding locations of the basic block unit.

Suitably, the encoder includes a binary computing unit to compute an average of a gray image corresponding to the basic block unit, if the determining unit determines that the basic block unit represents a non-edge unit; a binary converting unit to convert the average into binary data; and a storage unit to store the binary data and to match the binary data to corresponding locations of the basic block unit.

Suitably, an image forming apparatus is provided. The image forming apparatus includes an edge area determining unit to determine, upon receiving binary data, whether or not basic block units of the received data represent an edge area based on a flag bit of each of basic block unit; a decoder to convert the binary data into a gray image of basic block unit structure, based on whether the basic block unit represents an edge area; and a printing unit to print the converted gray image.

Suitably, the edge area determining unit determines a basic block unit having a flag bit 0 to represent an edge area, and determines the basic block unit having a flag bit 1 to represent a non-edge area.

Suitably, the decoder includes a gray converting unit to convert bits representing a basic block unit into gray values, if the basic block unit of the received binary data is determined to represent a non-edge area; and a storage unit to match the converted gray values to the basic block unit and to store the gray values.

Suitably, the decoder includes a gray converting unit to convert the bits of a basic block unit into gray values and to match to a bit in the center of the basic block unit, if the basic block unit of the received binary data is determined to represent a non-edge area; a gray computing unit to compute a gray value of each pixel of the basic block unit, using a bit in the center that is converted into the gray value and neighboring bits; and a storage unit to match the computed gray value to the basic block unit and to store the gray values.

In addition to the example embodiments and aspects as described above, further aspects and embodiments will be apparent by reference to the drawings and by study of the following descriptions.

BRIEF DESCRIPTION OF THE DRAWINGS

A better understanding of the present invention will become apparent from the following detailed description of example embodiments and the claims when read in connection with the accompanying drawings, all forming a part of the disclosure of this invention. While the following written and illustrated disclosure focuses on disclosing example embodiments of the invention, it should be clearly understood that the same is by way of illustration and example only and that the invention is not limited thereto. The spirit and scope of the present invention are limited only by the terms of the appended claims. The following represents brief descriptions of the drawings, wherein:

FIG. 1 is a block diagram of a print system according to an example embodiment of the present invention;
FIG. 2 is a more detailed block diagram of the structure of the print system shown in FIG. 1;
FIGS. 3A to 3C and FIGS. 4A to 4C are views provided to explain an encoding process of a host device according to an example embodiment of the present invention;
FIGS. 5A and 5B, FIGS. 6A and 6B, and FIG. 7 are views provided to explain a decoding process of an image forming apparatus according to an example embodiment of the present invention;
FIG. 8 is a flowchart illustrating an encoding process of a host device according to an example embodiment of the present invention;
FIG. 9 is a more detailed flowchart illustrating the encoding process shown in FIG. 8;
FIG. 10 is a flowchart illustrating a decoding process of an image forming apparatus according to an example embodiment of the present invention; and
FIG. 11 is a more detailed flowchart illustrating the decoding process shown in FIG. 10.

DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

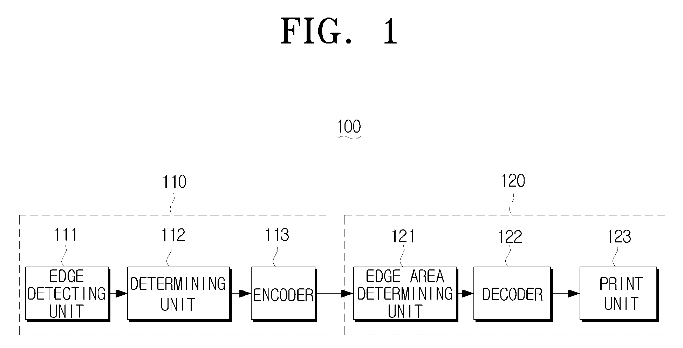

As shown in FIG. 1, a print system 100 according to an example embodiment of the present invention includes a host device 110 and an image forming apparatus 120. The host device 110 includes an edge detecting unit 111, a determining unit 112, and an encoder 113. The image forming apparatus 120 includes an edge area determining unit 121, a decoder 122 and a print unit 123. According to other embodiments of the present invention, the host device 110 and the image forming apparatus 120 may include additional and/or different units. Similarly, the functionality of one or more of the above units may be combined into a single component. The host device 110 may be a desktop computer, laptop computer, mobile phone, personal digital assistant, or personal entertainment device. The image forming apparatus 120 may be a printer, a facsimile machine, or a multi-function device.

The edge detecting unit 111 of the host device 110 detects an edge image from a gray image in response to a print command to print a gray image, such as a document or an image prepared on an application program. The edge detecting unit 111 generates a blurred gray image using a Gaussian filter, and then computes Sobel masking of the generated gray image. The edge detecting unit 111 then generates an edge image by converting the computed result into a value of 255 if the computed result exceeds a reference value, and converting the computed result into a value of 0, if the computed result is below the reference value. Detecting a borderline using Sobel masking is well known in the art, and therefore, explanation thereof will be omitted for the sake of brevity.

The determining unit 112 determines the presence of an edge area of the gray image by dividing the edge area detected by the edge detecting unit 111 into blocks. The blocks may correspond to n*n pixels. In the description set forth below, 3X3 blocks will be explained as a basic block unit of the blocks. The presence of an edge area is determined with respect to the non-overlapping basic block units that each corresponds to 3X3 pixels. Determining the presence of an edge area of the gray image may be determined according to the number of white pixels in the 3X3 basic block units.

The encoder 113 converts a gray image corresponding to 3X3 basic block units of edge information into binary data, according to the determination at the determining unit 112. If the determining unit 112 determines an edge image to be an edge area that contains edge information, the encoder 113 screens the pixels of the 3X3 basic block units and converts the pixels into binary data. If the determining unit 112 determines the edge image to be a non-edge area that contains no edge information, the encoder 113 converts the image into binary data using the pixel average of the 3X3 basic block units.

The binary data converted at the encoder 113 is transmitted to the image forming apparatus 120. When the binary data is received from the host device 110, the edge area determining unit 121 of the image forming apparatus 120 detects a flag bit within the 3X3 basic block unit, and determines whether the edge area exists or not. The flag bit indicates the presence of an edge area and may be marked as 0 or 1. The flag bit may be located in the center of the basic block unit; however, according to other aspects of the invention the flag bit may be located at any position in the basic block unit.

If the edge area determining unit 121 determines a basic block unit of the received binary data to be an edge area, the decoder 122 converts the pixels of the basic block unit into values of 0 or 255. If a basic block unit of the received binary data is determined to be a non-edge area, the decoder 122 aligns the binary pixels of the basic block unit and converts the pixels into gray values. The print unit 123 prints a gray image of the converted gray values.

Accordingly, the host device can reduce print data amount by approximately 1/8 prior to sending out the print data for printing. Additionally, by applying gray data conversion selectively, depending on whether or not the data includes an edge area, the image forming apparatus can provide image of enhanced depth resolution.

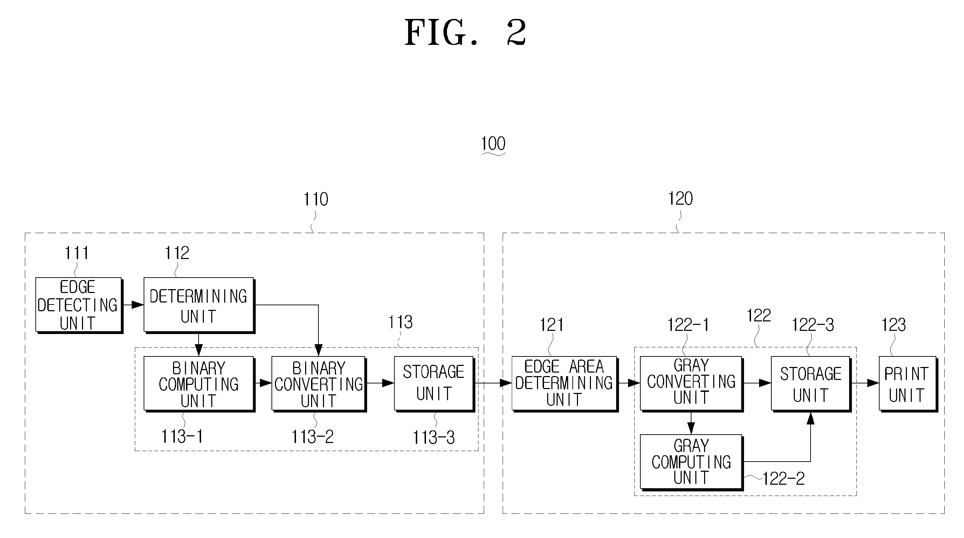

As shown in FIG. 2, the encoder 113 of the host device 110 of FIG. 1 includes a binary computing unit 113-1, a binary converting unit 113-2, and a storage unit 113-3. The decoder 122 of the image forming apparatus 120 includes a gray converting unit 122-1, a gray computing unit 122-2, and a storage unit 122-3.

If an edge image is detected from a gray image by the edge detecting unit 111 of the host device 110, the determining unit 112 divides the gray image into 3X3 basic blocks (or nxn basic blocks), and determines the presence of an edge area. If the number of white pixels included in a basic block unit of an edge image exceeds a reference value, the basic block is determined to be an edge area. If the number of white pixels is below the reference value, the basic block is determined to be a non-edge area. If the determining unit 112 determines the basic block unit of an edge image to be a non-edge area, the binary computing unit 113-1 averages the pixels of the basic block unit of the gray image.

The binary converting unit 113-2 converts the average obtained by the binary computing unit 113-1 into binary data, that is, into 8-bit binary data. A bit in the center of the basic block unit may be a flag bit '1', indicating that the area is a non-edge area. Accordingly, the binary data converted based on the basic block unit may be 9 bits, including 8 bits of average, and 1 bit of flag bit. The storage unit 113-3 stores the print data to be transmitted to the image forming apparatus 120. The storage unit 113-3 matches the binary data converted at the binary converting unit 113-2 according to the basic block unit, when storing the binary data.

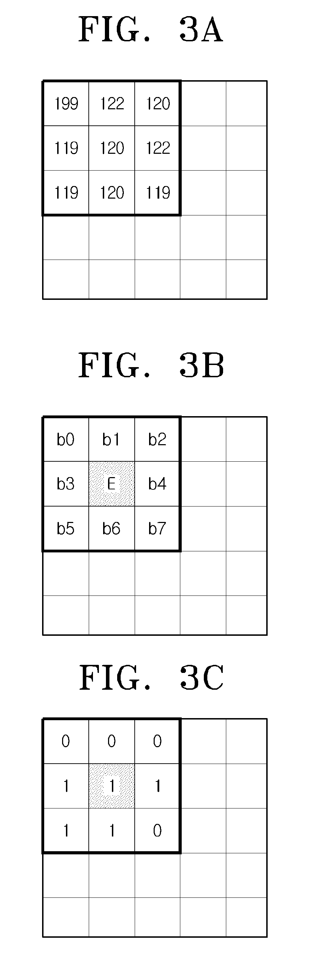

An encoding process will be explained below with reference to FIGS. 3A to 3C, in which the basic block unit of an edge image is non-edge area. FIG. 3A shows the pixels of the 3X3 blocks of a gray image. If a basic block unit of an edge area is determined to be a non-edge area, the average of the pixels is computed. Referring to FIG. 3A, the binary computing unit 113-1 computes 120 as the pixel average of the 3X3 blocks. The pixel average 120 is "01111000" when converted into 8-bit binary data. By matching the binary data to the locations b0, b1, b2, ..., b7 as shown in FIG. 3B, the binary data as shown in FIG. 3C is obtained. The bit E in the center is a flag bit to determine whether or not the area is an edge area. Because the basic block unit of FIG. 3C is a non-edge area, the bit in the center is thus converted to a flag bit "1".

If the basic block unit of an edge image is an edge area, the encoder 113 screens the pixels of the basic unit block of a gray image and converts the pixels into binary data. If the basic block unit is an edge area, the encoder 113 compares the basic block unit of a gray image with a prestored mask table, and converts the pixel to 0 if the pixel of the gray image exceeds a set value of the mask table, or converts the pixel to 1 if the pixel is below the set value of the mask table.

The bit in the center of the basic block unit may be a flag bit to determine the existence of an edge area, and thus may be converted to 0. According to other aspects of the invention, the basic block unit may be converted into binary data by matching the pixels of gray image, and a flag bit corresponding to the bit in the center may be added to the binary data. According to this embodiment, a basic block unit may be converted into 10-bit binary data.

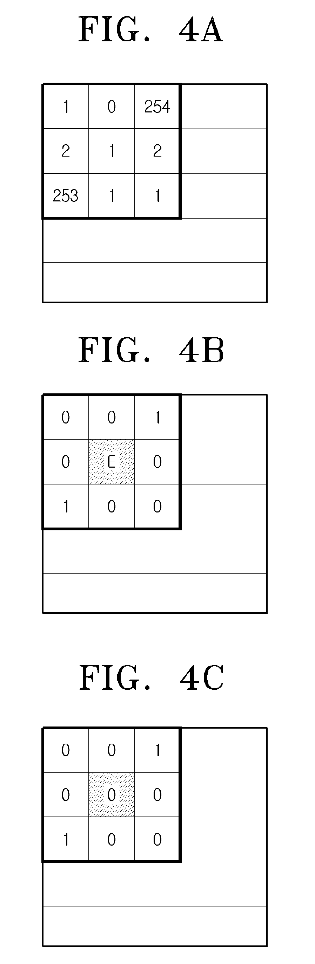

Another encoding process will be explained below with reference to FIGS. 4A to 4C, in which the basic block unit of an edge image is an edge area. FIG. 4A shows the pixels of the 3X3 blocks of a gray image. If a basic block unit of an edge area is determined to include edge information, the pixels of 3X3 blocks are compared (screened) with a prestored mask table (not shown), and converted into binary data as shown in FIG. 4B. The bit (E) in the center of the basic block unit shown in FIG. 4B may be a flag bit, which may be marked as 0, as shown in FIG. 4C.

The encoder 113 performs binary conversion for each of the 3X3 blocks until the binary data conversion is completed for an image to be printed. In this binary conversion process, the encoding does not overlap previously encoded blocks. The encoder 113 transmits the binary data to the image forming apparatus 120 when the binary data conversion according to the presence and absence of an edge area is completed.

If binary data is received from the host device 110, the edge area determining unit 121 of the image forming apparatus 120 checks the flag bit in each of the 3X3 blocks, and determines the presence and absence of the edge area. A block may be determined to be an edge area if the flag bit is 0, and a block may be determined to be a non-edge area if the flag bit is 1. If the received binary data is based on 9-bit units, the flag bit may be the bit in the center of each 3X3 block unit. If the received binary data is based on 10-bit units, the flag bit may be detected from the additional bit.

As mentioned above, the decoder 122 of the image forming apparatus 120 may include the gray converting unit 122-1, the gray computing unit 122-2, and the storage unit 122-3. The gray converting unit 122-1 converts bits of a basic block unit into gray values if the 3X3 block unit of the received binary data is determined to be an edge area. Binary data 0 may be converted into a gray value 0, and binary data 1 may be converted into gray value 255.

If the bit in the center of a basic block unit is a flag bit, and if the number of gray values 255 within the basic block unit exceeds a reference value, the bits are converted into a gray value of 255. If the number of gray values 255 within the basic block unit is below the reference value, the bits are converted into a gray value of 0.

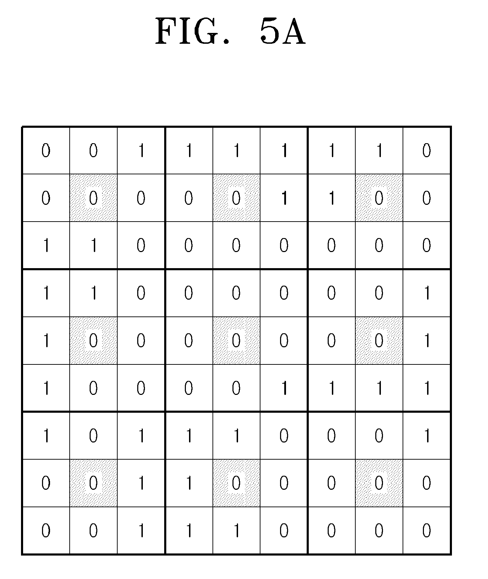

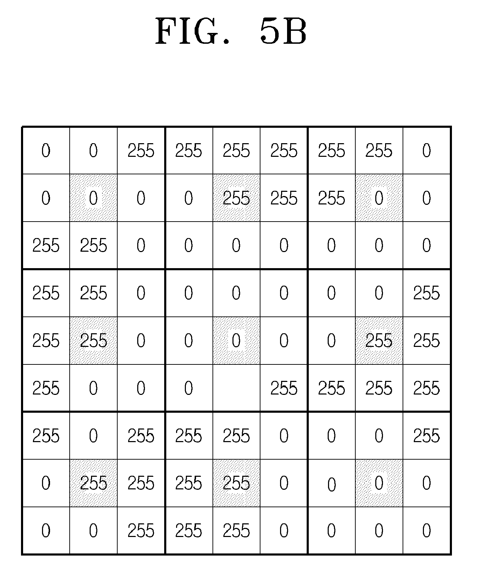

Decoding processes will be explained below with reference to FIGS. 5A and 5B, in which the basic block unit is an edge area. FIG. 5A shows binary data received from the host device 110. The binary data is divided into a plurality of 3X3 block units, and whether a 3X3 block includes an edge area is determined by detecting the bit in the center of each 3X3 block unit. The first basic block unit shown in FIG. 5A includes a 0 bit in the center, and the first basic block unit is accordingly determined to be an edge area.

In the above example, the pixels of the basic block unit may be converted into the gray values as shown in FIG. 5B. The gray conversion is processed in sequence, from the left top towards the right bottom, without overlapping the already-processed block units. Therefore, the second basic block unit next to the first basic block unit is converted into gray values after the conversion of the first basic block unit is completed. According to other aspects of the invention, the gray conversion may be performed in another sequence.

For example, if the reference value is 5, the first basic block unit is below the reference value as the first basic block unit includes three pixels having values of 255. Accordingly, the bit in the center of the first basic block is converted into 0. If a 3X3 block unit of the received binary data is determined to be a non-edge area, the gray converting unit 122-1 aligns the binary values of the basic block and converts the binary values into gray values.

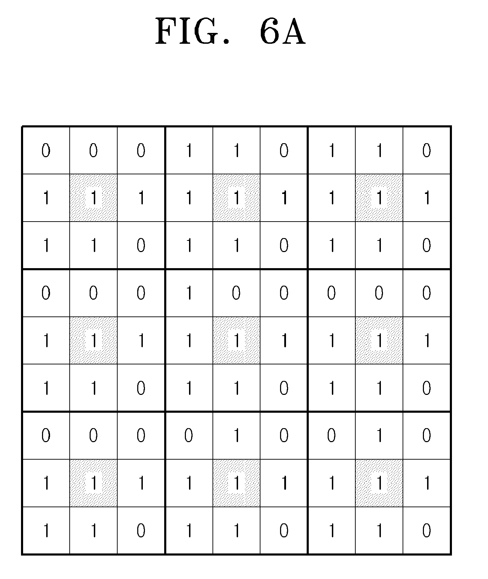

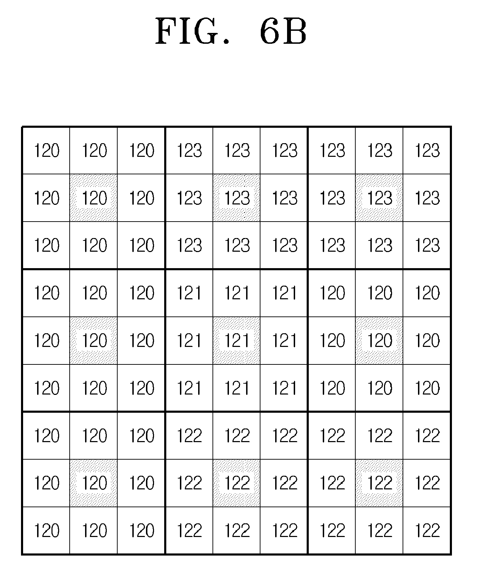

The storage unit 122-3 matches the converted gray values to the locations of the corresponding basic block unit when the gray values are stored. For example, the basic block unit has the same gray values if the basic block unit is a non-edge area. Gray conversion of a non-edge area will be explained below with reference to FIGS. 6A and 6B.

FIG. 6A shows the binary data received from the host device 110, and FIG. 6B shows the result of arranging the binary values of a basic block unit in reverse, converting the binary values into gray values, and matching the converted gray values to the corresponding basic block unit. The bit in the center is a flag bit and is thus excluded in the gray value conversion.

The binary values of the first basic block unit of FIG. 6A is "01111000" when arranged in reverse. These values are converted into a gray value of 120. FIG. 6B shows that all the pixels of the first basic block unit are converted into a gray value of 120.

The gray computing unit 122-2 computes a gray value using the gray value obtained at the gray converting unit 122-1 and the neighboring values. Because pixels in the border have no neighboring values, a prestored reference value is used. The gray computing unit 122-2 may perform computation using mathematical formula 1:

[Mathematical formula 1]

$$g(i+k,j+l) = \frac{2f(i,j) + f(i+3k,j+3l)}{3}$$

where g(i+k, j+1) denote gray values converted by the gray computing unit 122-2, and f(i, j) is a gray value of a bit in the center that is converted at the gray converting unit 122-1. In the above formula, (k,l) is an element of the set {(0,1), (0,-1), (1,0), (-1,0)}. If a bit in the center is (i, j), gray values of (i, j+1), (i, j-1), (i+1,j), (i-1, j) may be computed using mathematical formula 1.

If the bit in the center is (i, j), gray values of (i-1, j-1), (i-1, j+1), (i+1, j-1), (i+1,j+1) may be computed, using mathematical formula 2:

[Mathematical formula 2]

$$g(i+m,j+n) = \frac{8f(i,j) + 5f(i+3m,j) + 5f(i,j+3n) + 2f(i+3m,j+3n)}{20}$$

where g(i+m, j+n) denotes a gray value converted at the gray computing unit 122-2, and f(i,j) is a gray value of a bit in the center, which is converted at the gray converting unit 122-1. In the above mathematical formula, (m,n) is an element of the set {(-1,-1), (-1,1), (1,-1), (1,1)}. Other conversion techniques, for example using different formulae, are possible as well.

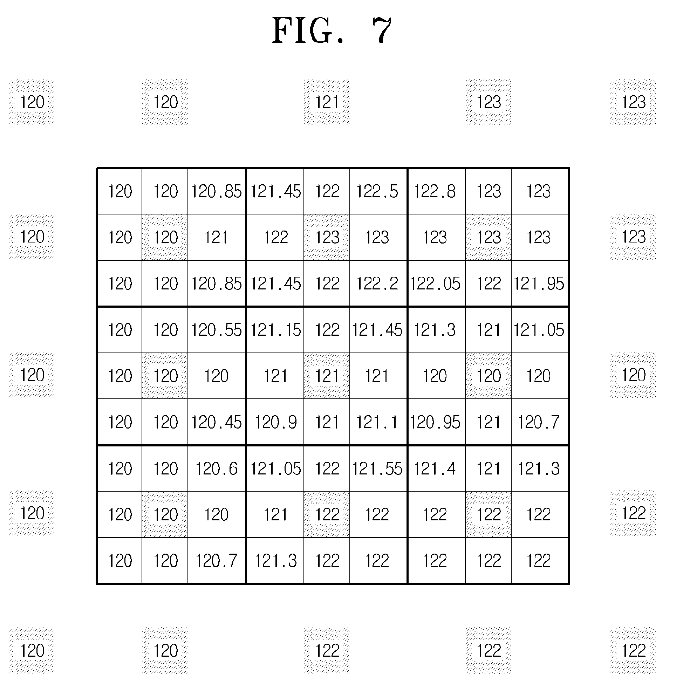

The results of mathematical formulae 1 and 2 are illustrated in FIG. 7. FIG. 7 explains the decoding process of using the neighboring values of a smooth area. If binary data as shown in FIG. 6A is input, the result as shown in FIG. 7 may be obtained using mathematical formulae 1 and 2. Non-integer results may be rounded off to the nearest integer. As shown in FIG. 7, blocking artifacts are prevented, and depth resolution is enhanced, by using the reference values for the boundary blocks, gray values of the bits in the centers, and the neighboring values.

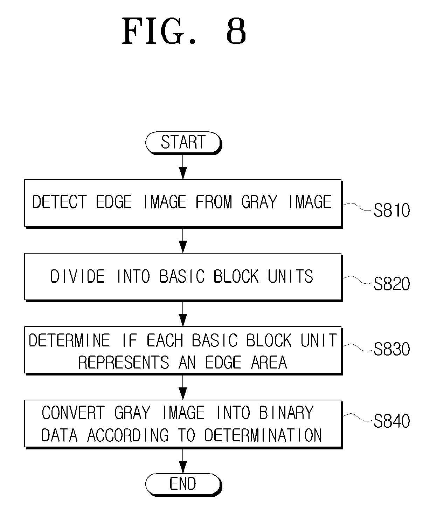

FIG. 8 is a flowchart illustrating an encoding method of a host device according to an example embodiment of the present invention. An edge image is detected from a gray image as block S810. A blurred gray image is generated using a Gaussian filter, and Sobel masking is applied to the generated gray image. The result of masking is compared with a prestored reference value, and accordingly converted into gray values of 0 or 255. As a result, an edge image is detected.

The detected edge image and gray image is divided into a plurality of basic block units at block S820, and whether the basic block units are edge areas is determined at block S830 in a non-overlapping manner. Therefore, the basic block units that have already been processed are not included in the next processing. Whether the basic block units are edge areas may be determined according to the number of white pixels in the basic block units.

The gray image is converted into binary data according to the determination as to whether the edge area exists or not. If the basic block unit of the edge image is determined to be an edge area, the values of the basic block unit are screened and binarized. If the basic block unit is determined to be a non-edge area, the values of the basic block unit are averaged and binarized. The binarized values are transmitted to the image forming apparatus.

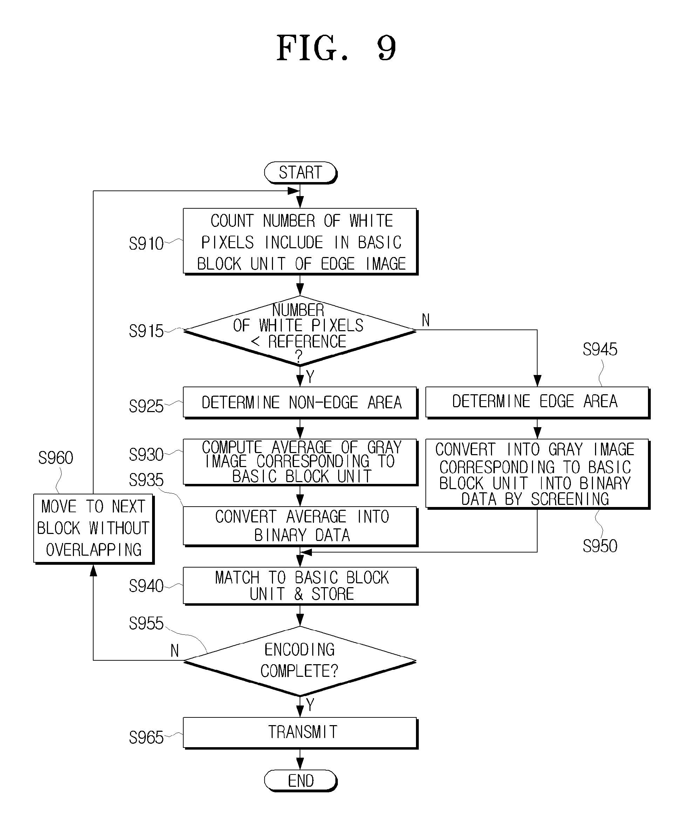

FIG. 9 is a flowchart to explain FIG. 8 in detail. The white pixels included in a basic block unit of an edge image are counted at block S910. At block S915, if the number of white pixels is below a reference value, then at block S925 the basic block unit is determined to be a non-edge area. If the number of white pixels exceeds the reference value, then at block S945 the basic block unit is determined to be an edge area.

If the basic block area is a non-edge area, an average of the gray image corresponding to the basic block unit is computed at block S930. Accordingly, the pixels of the basic block unit of the gray image are averaged. The average is then converted into 8-bit binary data at block S935.

The converted binary data are matched to the basic block unit in a reverse order and stored at block S940. As described above, the bit in the center of the basic block unit may be a flag bit, which may be converted into 1 when the basic block unit is a non-edge area.

If the basic block area is an edge area, a gray image corresponding to the basic block unit is screened and converted into binary data at block S950. As described above, the converted binary data is matched to the basic block unit and stored at block S940. This has been explained above, so will not be explained below for the sake of brevity.

At block S955, if there is a basic block unit that has yet to be processed, that is, if encoding is not completed, the next block is processed without overlapping the already-processed basic block units at block S960. Accordingly, blocks S91 0 to S940 are repeated. When the encoding is completed, the binary data is transmitted to the image forming apparatus at block S965.

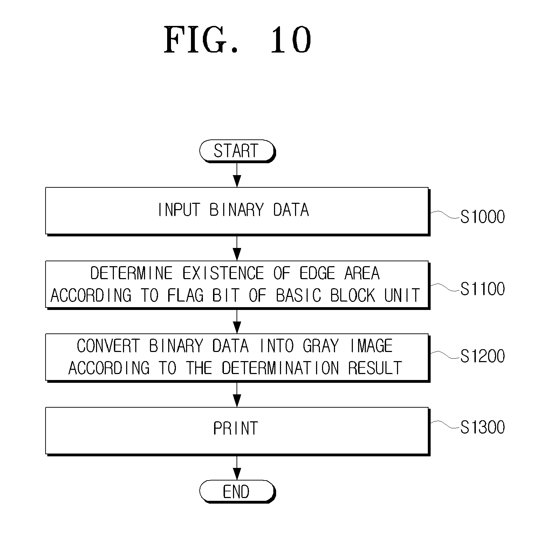

FIG. 10 is a flowchart to explain a decoding method of an image forming apparatus according to another example embodiment of the present invention. At block S1000, if binary data is received from the host device, the binary data is divided into a plurality of basic block units, and at block S1100 existence of an edge area is determined by detecting a flag bit of each basic block unit. For example, flag bits are detected in each of 3X3 block units, if the basic block unit is a 3X3 block unit.

If a flag bit is 0, the basic block unit may be determined to include edge information. If a flag bit is 1, the basic block unit may be determined to be a non-edge area. If the binary data is transmitted in 9-bit units, the flag bit may be the center of 3X3 blocks. If the binary data is transmitted in 10-bit units, the flag bit may be an additional bit.

At block S1200, the received binary data is converted into gray image according to whether it represents an edge area or a non-edge area. If the received binary data represents an edge area, the binary data may be converted into a gray image with gray values of 0 or 255. If the received binary data represents a non-edge area, the binary data may be converted into a gray image using the averages of the basic block units. Printing may be performed according to the converted gray images at block S1300.

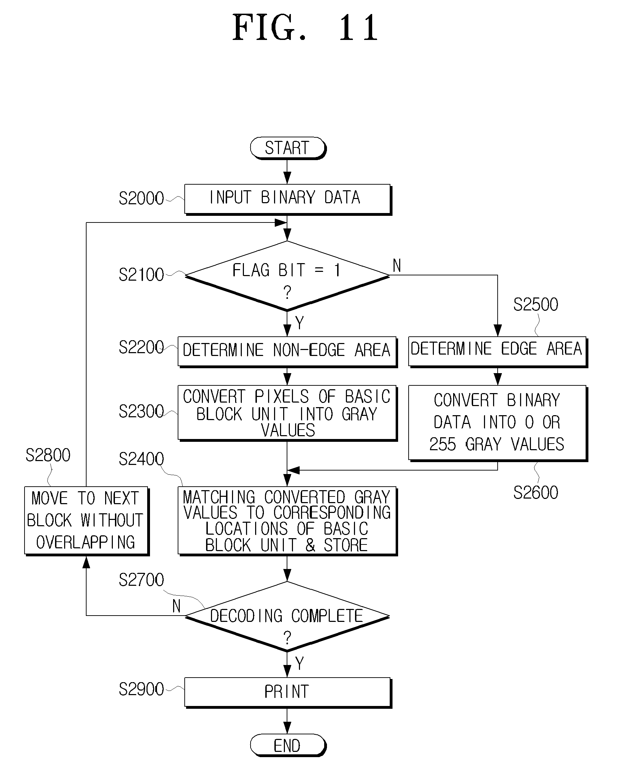

FIG. 11 is a flowchart to explain FIG. 10 in detail. At block S2000, if binary data is received, flag bits are detected from the basic block units. If a flag bit 1 is detected at block S21 00, then at block S2200, the binary data is determined to represent a non-edge area. If a flag bit 0 is detected, the binary data is determined to represent an edge area at block S2500. If the binary data represents a non-edge area, the bits of the basic block units are converted into gray values as described above with respect to FIGS 6A and 6B.

If the binary data represents an edge area, the binary data is converted into gray values of 0 or 255 at block S2600. The bits of the basic block units are converted into gray values. A binary value 0 is converted into a gray value 0, and a binary value 1 is converted into a gray value of 255. If the bit in the center of a basic block unit is a flag bit, and if the number of gray values of 255 within the basic block unit exceeds a reference value, the basic block unit is converted into gray values of 255. If the number of gray values of 255 within the basic block unit is below the reference value, the basic block unit is converted into gray values of 0. At block S2400, the gray values converted according to the presence and absence of edge areas are matched to the corresponding locations of the basic block units and stored.

If there is a next basic block unit to be processed, the next block is processed without overlapping the already-processed block units at block S2800, and blocks S21 00 to S2400 are repeated. At block S2700, if decoding is completed, then printing is performed according to the converted gray image at block S2900.

As explained above, according to preferred embodiments of the present invention, encoding and decoding is performed according to the presence and absence of an edge area. As a result, depth resolution of an image is enhanced, and print data transmission time is shortened.

The encoding and decoding processes according to the above-described example embodiments may be recorded in computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts. Examples of computer-readable media include magnetic media such as hard disks, floppy disks, and magnetic tape; optical media such as CD ROM disks and DVD; magneto-optical media such as optical disks; and hardware devices that are specially configured to store and perform program instructions, such as read-only memory (ROM), random access memory (RAM), flash memory, and the like. The media may also be a transmission medium such as optical or metallic lines, wave guides, and the like, including a carrier wave transmitting signals specifying the program instructions, data structures, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments of the present invention

While there have been illustrated and described what are considered to be example embodiments of the present invention, it will be understood by those skilled in the art and as technology develops that various changes and modifications, may be made, and equivalents may be substituted for elements thereof without departing from the true scope of the present invention. Many modifications, permutations, additions and sub-combinations may be made to adapt the teachings of the present invention to a particular situation without departing from the scope thereof. For example, the host device 110 may include a transmitter to transmit the binary data to the image forming apparatus via a wired or wireless connection. Alternatively, the host device 110 and the image forming apparatus 120 may be combined or integrated into a single unit. Accordingly, it is intended, therefore, that the present invention not be limited to the various example embodiments disclosed, but that the present invention includes all embodiments falling within the scope of the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An encoding method, comprising:

> detecting an edge image from a gray image;
> dividing the edge image into a plurality of basic block units and determining whether each of the basic block units represents an edge area of the gray image;
> converting the gray image into binary data by applying an encoding scheme corresponding to the result of the edge area determination; and

2. The encoding method of claim 1, wherein the dividing of the detected edge image comprises:

    determining that a basic block unit in the plurality of basic block units represents an edge area if the number of white pixels of the basic block unit exceeds a reference value; and
    determining that the basic block unit represents a non-edge area if the number of white pixels does not exceed the reference value.

3. The encoding method of claim 2, wherein the converting comprises screening the gray image corresponding to the basic block unit and converting the gray image into binary data, if the basic block unit is determined to represent an edge area.

4. The encoding method of claim 3, wherein the binary data comprises an additional flag bit to indicate whether or not the basic block unit represents an edge area.

5. The encoding method of claim 2, wherein the converting comprises:

    computing an average of the gray image corresponding to the basic block unit if the basic block unit is determined to represent a non-edge area; and
    converting the average into binary data.

6. The encoding method of claim 3, wherein a bit corresponding to a pixel in the center of the basic block unit is a flag bit indicating whether the basic block unit represents an edge area.

7. The encoding method of any preceding claim, further comprising:

    transmitting the binary data to an image forming apparatus so as to form an image corresponding to the binary data onto a printable medium

8. A decoding method, comprising:

    determining, upon receiving binary data, whether a plurality of basic block units in the received data represent an edge area according to a flag bit of each basic block unit;
    converting the binary data into a gray image of basic block unit structure, according to whether the basic block unit represents an edge area; and
    printing the converted gray image.

9. The decoding method of claim 8, wherein the determining comprises:

    determining that a basic block unit of the plurality of basic block units represents an edge area if the basic block unit has a flag bit 0; and
    determining that the basic block unit represents a non-edge area if the basic block unit has a flag bit 1.

10. The decoding method of claim 8, wherein the converting of the binary data comprises:

    converting bits representing a basic block unit of the plurality of basic block unit into gray values, if the basic block unit is determined to represent a non-edge area; and
    forming the gray image by matching the converted gray values to the basic block unit.

11. The decoding method of claim 8, comprising:

    converting the bits of a basic block unit of the plurality of basic block units into gray values and matching to a bit in the center of the basic block unit if the basic block unit of the received binary data represents a non-edge area;
    computing a gray value of each pixel of the basic block unit, using a bit in the center that is converted into the gray value and neighboring bits; and
    forming the gray image by matching the computed gray value to the basic block unit.

12. A print system (100) comprising:

a host device (110) to divide a gray image into basic block units, to determine whether the basic block units represent an edge area of the gray image, to convert the gray image into binary data, and to output the converted gray image; and

an image forming apparatus (120) to determine whether the binary data received from the host device represents an edge area, to convert the binary data into a gray image according to the result of the determination, and to print the gray image.

13. A host device (110) comprising:

an edge detecting unit (111) to detect an edge image from a gray image;

a determining unit (112) to divide the detected edge image into a plurality of basic block units, and to determine whether each of the basic block units represents an edge area of the gray image;

an encoder (113) to convert the gray image into binary data by applying an encoding scheme corresponding to the result of edge area determination; and

a transmitter to transmit the binary data to an image forming apparatus (120) for printing.

14. The host device (110) of claim 13, wherein the determining unit (112) determines a basic block unit of the plurality of basic block units to represent an edge area if the number of white pixels of the basic block unit exceeds a reference value; and determines the basic block unit to represent a non-edge area if the number of white pixels does not exceed the reference value.

15. The host device (110) of claim 13, wherein the encoder (113) comprises:

a binary converting unit (113 -2) to screen the gray image corresponding to the basic block unit and to convert the gray image into binary data, if the basic block unit is determined to represent an edge area; and

a storage unit (113-3) to store the converted binary data and to match the binary data to corresponding locations of the basic block unit.

16. The host device (110) of claim 15, wherein the binary data comprises an additional flag bit to indicate whether or not the basic block unit represents an edge area.

17. The host device (110) of claim 13, wherein the encoder (113) comprises:

a binary computing unit (113-1) to compute an average of a gray image corresponding to the basic block unit, if the determining unit determines that the basic block unit represents a non-edge unit;

a binary converting unit (113-2) to convert the average into binary data; and

a storage unit (113-3) to store the binary data and to match the binary data to corresponding locations of the basic block unit.

18. The host device (110) of claim 15, wherein a bit corresponding to a pixel in the center of the basic block unit is a flag bit indicating whether or not the basic block unit represents an edge area.

19. An image forming apparatus (120), comprising:

an edge area determining unit (121) to determine, upon receiving binary data, whether or not basic block units of the received data represent an edge area based on a flag bit of each of basic block unit;

a decoder (122) to convert the binary data into a gray image of basic block unit structure, based on whether the basic block unit represents an edge area; and

a printing unit (123) to print the converted gray image.

20. The image forming apparatus (120) of claim 19, wherein the edge area determining unit (121) determines a basic block unit having a flag bit 0 to represent an edge area, and determining a basic block unit having a flag bit 1 to represent a non-edge area.

21. The image forming apparatus (120) of claim 19 or claim 20, wherein the decoder (122) comprises:

a gray converting unit (122-1) to convert bits representing a basic block unit into gray values if the basic block unit of the received binary data is determined to represent a non-edge area; and

a storage unit (122 -3) to match the converted gray values to the basic block unit and to store the gray values.

22. The image forming apparatus (120) of claim 19, wherein the decoder (122) comprises:

a gray converting unit (122 -1) to convert the bits of a basic block unit into gray values and to match to a bit in the center of the basic block unit, if the basic block unit of the received binary data is determined to represent a non-edge area;
a gray computing unit (122-2) to compute a gray value of each pixel of the basic block unit, using a bit in the center that is converted into the gray value and neighboring bits; and
a storage unit (122-3) to match the computed gray value to the basic block unit and to store the gray values.

23. The decoding method of claim 11, wherein:

the basic block unit is located at a border of the image; and
the computing of the gray value comprises computing a gray value of the basic block unit using the bit in the center and a pre-stored reference value.

24. The decoding method of claim 22, wherein:

the basic blocks are 3x3 blocks of pixels; and
the computing of the gray value comprises computing the gray value of pixels corresponding to (i, j+1), (i, j-1), (i+1, j), and (i-1, j), where (i, j) indicates the pixel in the center of the basic block, using the formula

$$g(i+k,j+l) = \frac{2f(i,j)+f(i+3k,j+3l)}{3},$$

where g(i+k, j+l) indicates the result of the computing of the gray value, f(i, j) is the gray value of the bit in the center, (k,l) is an element of the set {(0,1), (0,-1), (1,0), (-1,0)}, and computing the gray value of pixels corresponding to (i-1, j-1), (i-1, j+1), (i+1, j-1), and (i+1, j+1), using the formula

$$g(i+m,j+n) = \frac{8f(i,j)+5f(i+3m,j)+5f(i,j+3n)+2f(i+3m,j+3n)}{20},$$

where (m,n) is an element of the set {(-1,-1), (-1,1), (1,-1), (1,1)}.

25. The decoding method of claim 11, wherein:

the basic blocks are 3x3 blocks of pixels; and
the gray computing unit computes the gray value of pixels corresponding to (i, j+1), (i, j-1), (i+1, j), and (i-1, j), where (i, j) indicates the pixel in the center of the basic block, using the formula

$$g(i+k,j+l) = \frac{2f(i,j)+f(i+3k,j+3l)}{3},$$

where g(i+k, j+l) indicates the result of the computing of the gray value, f(i, j) is the gray value of the bit in the center, (k,l) is an element of the set {(0,1), (0,-1), (1,0), (-1,0)}, and computes the gray value of pixels corresponding to (i-1, j-1), (i-1, j+1), (i+1, j-1), and (i+1, j+1), using the formula

$$g(i+m,j+n)=\frac{8f(i,j)+5f(i+3m,j)+5f(i,j+3n)+2f(i+3m,j+3n)}{20},$$

where (m,n) is an element of the set {(-1,-1), (-1,1), (1,-1), (1,1)}.

26. A computer readable medium comprising instructions that, when executed by a host device, cause the host device to perform the method of any one of claims 1-7.

27. A computer readable medium comprising instructions that, when executed by an image forming apparatus, cause the image forming apparatus to perform the method of any one of claim 8-11.

28. A printing system (100) comprising:

a host device (110) to divide a gray image into a plurality of basic blocks, to convert each of the basic blocks into binary data based on whether the basic block represents an edge area of the gray image, and to output the binary data; and
an image forming apparatus (120) to receive the binary data from the host device, to convert each basic block in the binary data into a gray image based on whether the basic block is an edge area, and to print the gray image onto a printable medium.

29. The printing system (100) of claim 28, wherein the host device (110) and the image forming apparatus (120) are integrated into a single apparatus.

30. The method of claim 8, wherein, for basic block units determined to be edge areas, the converting of the binary data comprises:

converting the binary values of 0 in the basic block unit into a gray value of 0;
converting the binary values of 1 in the basic block unit into a gray value of 255;
converting the binary value in a center pixel of the basic block unit into a gray value of 255 if the number of pixels in the basic block unit having a gray value exceeds a reference value; and
converting the binary value in the center pixel of the basic block unit into a gray value of 0 if the number of pixels in the basic block unit having a gray value of 255 does not exceed the reference value.

31. The image forming apparatus of claim 19, wherein, for basic block units determined to be edge areas, the converter converts the binary data into the gray image by converting the binary values of 0 in the basic block unit into a gray value of 0, converting the binary values of 1 in the basic block unit into a gray value of 255, converting the binary value in a center pixel of the basic block unit into a gray value of 255 if the number of pixels having a gray value 255 exceeds a reference value, and converting the binary value in the center pixel of the basic block unit into a gray value of 0 if the number of pixels having a gray value 255 does not exceed the reference value.

# FIG. 1

100

110

120

| 111 | 112 | 113 | 121 | 122 | 123 |

EDGE DETECTING UNIT → DETERMINING UNIT → ENCODER → EDGE AREA DETERMINING UNIT → DECODER → PRINT UNIT

# FIG. 2

# FIG. 3A

| 199 | 122 | 120 | | |
|-----|-----|-----|---|---|
| 119 | 120 | 122 | | |
| 119 | 120 | 119 | | |
| | | | | |
| | | | | |

# FIG. 3B

| b0 | b1 | b2 | | |
|----|----|----|---|---|
| b3 | E  | b4 | | |
| b5 | b6 | b7 | | |
| | | | | |
| | | | | |

# FIG. 3C

| 0 | 0 | 0 | | |
|---|---|---|---|---|
| 1 | 1 | 1 | | |
| 1 | 1 | 0 | | |
| | | | | |
| | | | | |

# FIG. 4A

| 1 | 0 | 254 | | |
|---|---|-----|---|---|
| 2 | 1 | 2 | | |
| 253 | 1 | 1 | | |
| | | | | |
| | | | | |

# FIG. 4B

| 0 | 0 | 1 | | |
|---|---|---|---|---|
| 0 | E | 0 | | |
| 1 | 0 | 0 | | |
| | | | | |
| | | | | |

# FIG. 4C

| 0 | 0 | 1 | | |
|---|---|---|---|---|
| 0 | 0 | 0 | | |
| 1 | 0 | 0 | | |
| | | | | |
| | | | | |

# FIG. 5A

| 0 | 0 | 1 | 1 | 1 | 1 | 1 | 1 | 0 |
|---|---|---|---|---|---|---|---|---|
| 0 | 0 | 0 | 0 | 0 | 1 | 1 | 0 | 0 |
| 1 | 1 | 0 | 0 | 0 | 0 | 0 | 0 | 0 |
| 1 | 1 | 0 | 0 | 0 | 0 | 0 | 0 | 1 |
| 1 | 0 | 0 | 0 | 0 | 0 | 0 | 0 | 1 |
| 1 | 0 | 0 | 0 | 0 | 1 | 1 | 1 | 1 |
| 1 | 0 | 1 | 1 | 1 | 0 | 0 | 0 | 1 |
| 0 | 0 | 1 | 1 | 0 | 0 | 0 | 0 | 0 |
| 0 | 0 | 1 | 1 | 1 | 0 | 0 | 0 | 0 |

# FIG. 5B

| | | | | | | | | |
|---|---|---|---|---|---|---|---|---|
| 0 | 0 | 255 | 255 | 255 | 255 | 255 | 255 | 0 |
| 0 | 0 | 0 | 0 | 255 | 255 | 255 | 0 | 0 |
| 255 | 255 | 0 | 0 | 0 | 0 | 0 | 0 | 0 |
| 255 | 255 | 0 | 0 | 0 | 0 | 0 | 0 | 255 |
| 255 | 255 | 0 | 0 | 0 | 0 | 0 | 255 | 255 |
| 255 | 0 | 0 | 0 | | 255 | 255 | 255 | 255 |
| 255 | 0 | 255 | 255 | 255 | 0 | 0 | 0 | 255 |
| 0 | 255 | 255 | 255 | 255 | 0 | 0 | 0 | 0 |
| 0 | 0 | 255 | 255 | 255 | 0 | 0 | 0 | 0 |

# FIG. 6A

| 0 | 0 | 0 | 1 | 1 | 0 | 1 | 1 | 0 |
|---|---|---|---|---|---|---|---|---|
| 1 | 1 | 1 | 1 | 1 | 1 | 1 | 1 | 1 |
| 1 | 1 | 0 | 1 | 1 | 0 | 1 | 1 | 0 |
| 0 | 0 | 0 | 1 | 0 | 0 | 0 | 0 | 0 |
| 1 | 1 | 1 | 1 | 1 | 1 | 1 | 1 | 1 |
| 1 | 1 | 0 | 1 | 1 | 0 | 1 | 1 | 0 |
| 0 | 0 | 0 | 0 | 1 | 0 | 0 | 1 | 0 |
| 1 | 1 | 1 | 1 | 1 | 1 | 1 | 1 | 1 |
| 1 | 1 | 0 | 1 | 1 | 0 | 1 | 1 | 0 |

# FIG. 6B

| 120 | 120 | 120 | 123 | 123 | 123 | 123 | 123 | 123 |
| 120 | 120 | 120 | 123 | 123 | 123 | 123 | 123 | 123 |
| 120 | 120 | 120 | 123 | 123 | 123 | 123 | 123 | 123 |
| 120 | 120 | 120 | 121 | 121 | 121 | 120 | 120 | 120 |
| 120 | 120 | 120 | 121 | 121 | 121 | 120 | 120 | 120 |
| 120 | 120 | 120 | 121 | 121 | 121 | 120 | 120 | 120 |
| 120 | 120 | 120 | 122 | 122 | 122 | 122 | 122 | 122 |
| 120 | 120 | 120 | 122 | 122 | 122 | 122 | 122 | 122 |
| 120 | 120 | 120 | 122 | 122 | 122 | 122 | 122 | 122 |

# FIG. 7

| | | | | | | | |
|---|---|---|---|---|---|---|---|
| 120 | | 120 | | 121 | | 123 | | 123 |

| 120 | 120 | 120.85 | 121.45 | 122 | 122.5 | 122.8 | 123 | 123 |
|---|---|---|---|---|---|---|---|---|
| 120 | 120 | 121 | 122 | 123 | 123 | 123 | 123 | 123 |
| 120 | 120 | 120.85 | 121.45 | 122 | 122.2 | 122.05 | 122 | 121.95 |
| 120 | 120 | 120.55 | 121.15 | 122 | 121.45 | 121.3 | 121 | 121.05 |
| 120 | 120 | 120 | 121 | 121 | 121 | 120 | 120 | 120 |
| 120 | 120 | 120.45 | 120.9 | 121 | 121.1 | 120.95 | 121 | 120.7 |
| 120 | 120 | 120.6 | 121.05 | 122 | 121.55 | 121.4 | 121 | 121.3 |
| 120 | 120 | 120 | 121 | 122 | 122 | 122 | 122 | 122 |
| 120 | 120 | 120.7 | 121.3 | 122 | 122 | 122 | 122 | 122 |

120    120    122    122    122

# FIG. 8

```
                    ( START )
                        │
                        ▼
   ┌─────────────────────────────────────┐
   │ DETECT EDGE IMAGE FROM GRAY IMAGE   │ ～ S810
   └─────────────────────────────────────┘
                        │
                        ▼
   ┌─────────────────────────────────────┐
   │     DIVIDE INTO BASIC BLOCK UNITS    │ ～ S820
   └─────────────────────────────────────┘
                        │
                        ▼
   ┌─────────────────────────────────────┐
   │ DETERMINE IF EACH BASIC BLOCK UNIT  │ ～ S830
   │      REPRESENTS AN EDGE AREA         │
   └─────────────────────────────────────┘
                        │
                        ▼
   ┌─────────────────────────────────────┐
   │    CONVERT GRAY IMAGE INTO BINARY    │ ～ S840
   │ DATA ACCORDING TO DETERMINATION      │
   └─────────────────────────────────────┘
                        │
                        ▼
                    ( END )
```

# FIG. 9

START

S910 — COUNT NUMBER OF WHITE PIXELS INCLUDE IN BASIC BLOCK UNIT OF EDGE IMAGE

S915 — NUMBER OF WHITE PIXELS < REFERENCE ?

N →

S925 — DETERMINE NON-EDGE AREA

S945 — DETERMINE EDGE AREA

S930 — COMPUTE AVERAGE OF GRAY IMAGE CORRESPONDING TO BASIC BLOCK UNIT

S935 — CONVERT AVERAGE INTO BINARY DATA

S950 — CONVERT INTO GRAY IMAGE CORRESPONDING TO BASIC BLOCK UNIT INTO BINARY DATA BY SCREENING

S960 — MOVE TO NEXT BLOCK WITHOUT OVERLAPPING

S940 — MATCH TO BASIC BLOCK UNIT & STORE

S955 — ENCODING COMPLETE?

N

Y

S965 — TRANSMIT

END

# FIG. 10

```
                    ┌─── START ───┐
                          │
                          ▼
        ┌─────────────────────────────────────┐
        │         INPUT BINARY DATA           │ ──── S1000
        └─────────────────────────────────────┘
                          │
                          ▼
        ┌─────────────────────────────────────┐
        │   DETERMINE EXISTENCE OF EDGE AREA   │
        │ ACCORDING TO FLAG BIT OF BASIC BLOCK │ ──── S1100
        │               UNIT                   │
        └─────────────────────────────────────┘
                          │
                          ▼
        ┌─────────────────────────────────────┐
        │  CONVERT BINARY DATA INTO GRAY IMAGE │
        │ ACCORDING TO THE DETERMINATION RESULT│ ──── S1200
        └─────────────────────────────────────┘
                          │
                          ▼
        ┌─────────────────────────────────────┐
        │               PRINT                 │ ──── S1300
        └─────────────────────────────────────┘
                          │
                          ▼
                    ┌──── END ────┐
```

# FIG. 11

START

S2000 — INPUT BINARY DATA

S2100 — FLAG BIT = 1 ? —N→

S2500

Y

S2200 — DETERMINE NON-EDGE AREA

DETERMINE EDGE AREA

S2300 — CONVERT PIXELS OF BASIC BLOCK UNIT INTO GRAY VALUES

CONVERT BINARY DATA INTO 0 OR 255 GRAY VALUES

S2600

S2800

S2400 — MATCHING CONVERTED GRAY VALUES TO CORRESPONDING LOCATIONS OF BASIC BLOCK UNIT & STORE

MOVE TO NEXT BLOCK WITHOUT OVERLAPPING

S2700 — N — DECODING COMPLETE ?

Y

S2900 — PRINT

END